# EUROPEAN PATENT APPLICATION

(11) **EP 3 082 276 A1**
(43) Date of publication of application: **19.10.2016**
(21) Application number: 14869023.3
(22) Date of filing: 20.11.2014
(51) Int. Cl.: H04B 10/079, H04J 14/00, H04J 14/02

(54) **WAVELENGTH-MULTIPLEXED TRANSPORT SYSTEM**

(30) Priority: 10.12.2013 JP 2013255123
(71) Applicant: Mitsubishi Electric Corporation, Chiyoda-ku Tokyo 100-8310 (JP)
(72) Inventor: HAYASHI, Shusaku, Tokyo 100-8310 (JP)
(74) Representative: Sajda, Wolf E.
(86) International application number: PCT/JP2014/080771
(87) International publication number: WO 2015/087681

(57) **Abstract**

Disclosed is a wavelength multiplexing transmission system including an optical transmission and reception device (1) including a plurality of transponders (11) each having a plurality of optical transmitters and receivers (111) disposed therein, a BER monitoring device (3) to monitor the BERs of the optical transmitters and receivers (111), variable optical attenuators (23) to attenuate light signals output from the optical transmitters and receivers (111), a controller (24) to control the amounts of attenuation of the variable optical attenuators (23) in such a way that the sum total of the BERs of the optical transmitters and receivers which are monitored by the BER monitoring device (3) becomes small, and an optical multiplexing and demultiplexing device (2) to multiplex the light signals attenuated by the variable optical attenuators (23) into a light signal and transmit this light signal to outside the wavelength multiplexing transmission system, and demultiplex a light signal from outside the wavelength multiplexing transmission system into light signals and transmit these light signals to the optical transmitters and receivers (111).

## Description

### FIELD OF THE INVENTION

The present invention relates to a wavelength multiplexing transmission system provided with an optical transmission and reception device having a plurality of transponders each having a plurality of optical transmitters and receivers.

### BACKGROUND OF THE INVENTION

Optical submarine cable transmission systems are divided roughly into unrepeated transmission methods which are applied to cross-strait communications for a short distance, or the like, and repeated transmission methods which are applied to cross-ocean communications for a long distance, or the like. Typically, an optical submarine cable transmission system based on a relay transmission method is comprised of a submarine transmission line, coast station devices disposed on lands on both ends of the submarine transmission line, etc., and submarine repeaters are disposed at repeating spans of about 50 km in the submarine transmission line. In optical submarine cable transmission systems, a wavelength division multiplexing optical transmission (WDM) technique is used typically.

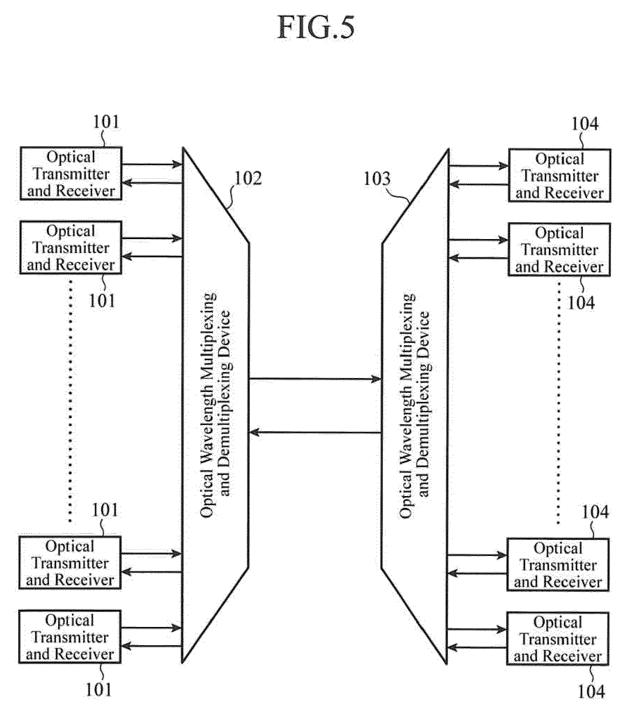

FIG. 5 is a schematic diagram showing the configuration of a WDM device. The WDM device is comprised of a plurality of optical transmitters and receivers 101, an optical wavelength multiplexing and demultiplexing device 102, an optical wavelength multiplexing and demultiplexing device 103, and a plurality of optical transmitters and receivers 104. The plurality of optical transmitters and receivers 101 are provided with lasers, respectively, and emit laser lights having different wavelengths.

The optical transmitters and receivers 101 modulate those laser lights and generate transmission signals. After that, the above-mentioned plurality of transmission signals are multiplexed by the optical wavelength multiplexing and demultiplexing device 102. The transmission signals multiplexed are then transmitted by way of an optical submarine cable. On the other hand, on the receiver side, the multiplexed transmission signals are demultiplexed into the light signals having wavelengths by the optical wavelength multiplexing and demultiplexing device 103.

The plurality of optical transmitters and receivers 104 receive the light signals, respectively, and convert the light signals into electric signals by using optical receiving elements disposed therein. This WDM technique has an advantage of enabling transmission of a large volume of information from a small amount of cable resource.

In optical submarine cable transmission systems using a WDM technique, the communication capacity can be increased by using a method of narrowing the wavelength interval and multiplexing transmission signals densely, or a method of increasing the bit rate of each optical transmitter and receiver 101. Currently, an optical submarine cable transmission system having a transmission rate of 40 Gbps or 100 Gbps is implemented.

On the other hand, when the wavelength interval is narrowed to multiplex transmission signals densely, the transmission light power increases. For example, when the transmission light power per wave is set to +10 dBm and the number of transmission signals to be multiplexed is set to 64, the transmission light power reaches up to +28 dBm.

However, because a nonlinear effect of fibers occurs remarkably and this results in degradation in the transmission characteristics when the light power input to the optical fiber is increased, there is a limit to the transmission light power. Therefore, it is necessary to decrease the transmission light power per wave. A problem is however that because the S/N ratio (Signal to Noise) is reduced when the transmission light power is decreased, the transmission characteristics get worse when the transmission light power is decreased too much.

Further, when the bit rate is increased, the spectral width of each transmission light becomes large. Therefore, in the case of using OOK (ON-OFF Keying) or DPSK (Differential Phase Shift Keying) which is a conventional modulation method, there occurs a disadvantage of being unable to narrow the wavelength interval and hence gain a larger number of wavelengths to be multiplexed.

As a means for solving these problems, there has been proposed a method using multi-level modulation, such as a DP-QPSK (Dual Polarization Quadrature Phase Shift Keying) modulation method or a DP-BPSK (Dual Polarization Binary Phase Shift Keying) modulation method, which is one of digital coherent methods. In addition, there has been also proposed a multi carrier system in which a plurality of optical transmitters and receivers are disposed in a single transponder and the bit rate is increased by transmitting signals with a plurality of wavelengths. For example, in the case in which the number of multiple carriers is 2, two optical transmitters and receivers are disposed in the single transponder and signals are transmitted with two wavelengths.

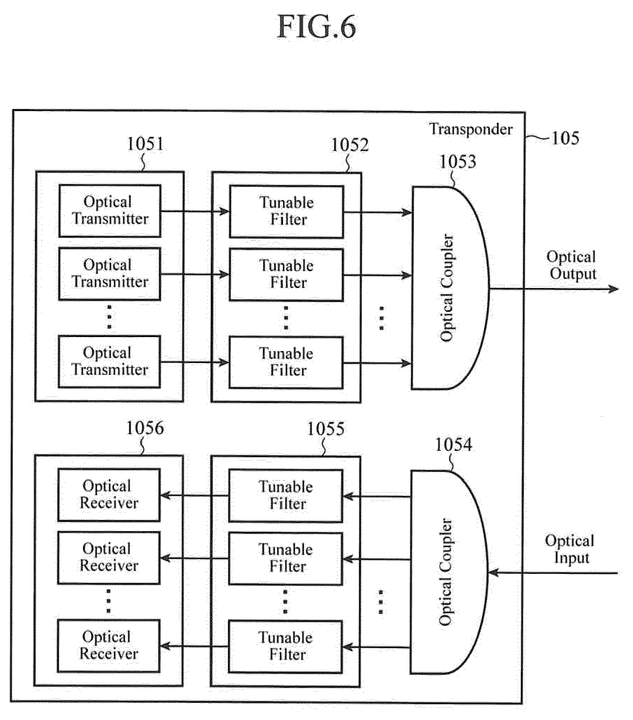

Conventionally, in the case of using a multi carrier system, there is provided a configuration in which multiplexing and demultiplexing of carriers is carried out within a transponder and one input/output is then performed into consideration the case where the optical wavelength multiplexing and demultiplexing device is not used. In this case, as shown in FIG. 6, a transmit side in the transponder 105 outputs a plurality of light signals from optical transmitters 1051 whose number is the same as the number of carriers, performs spectrum narrowness on the light signals by using optical tunable filters 1052 in order to suppress the interference among the carriers, and multiplexes the light signals by using an optical coupler 1053.

Further, a receiver side demultiplexes light signals transmitted thereto into the plurality of light signals by using an optical coupler 1054, extracts only the light signals received by using optical tunable filters 1055, and receives the light signals by using optical receivers 1056 whose number is the same as the number of carriers.

A problem with this configuration is however that the optical tunable filters 1052 and 1055 whose number is two times as large as the number of carriers and the two optical couplers 1053 and 1054 are needed in the transponder 105, and therefore the configuration is complicated and costs a lot.

Further, in a wavelength multiplexing transmission system using a conventional multi carrier method, as a cause of degradation in the transmission characteristics, there can be provided, for example, a lack in the balance of the spectrum at the time of wavelength multiplexing, the lack being caused by the occurrence of a difference among the light powers of the carriers, or an increase in the nonlinear penalty due to the long distance transmission, the increase being caused by the matching of the polarizations or the modulation timings of the carriers.

### RELATED ART DOCUMENT

### PATENT REFERENCE

Patent Reference 1: Japanese Unexamined Patent Application Publication JP 2001-230 759 A

### SUMMARY OF THE INVENTION

### PROBLEMS TO BE SOLVED BY THE INVENTION

As mentioned above, a wavelength multiplexing transmission system using a conventional multi carrier method has a configuration which needs optical tunable filters 1052 and 1055 and optical couplers 1053 and 1054 in a transponder 105, and is therefore complicated and costs a lot. A further problem is that conventionally, the balance of the spectrum comes undone at the time of wavelength multiplexing due to a power difference among the carriers, and the nonlinear penalty becomes large and the transmission characteristics degrade because the polarizations or the modulation timing of the carriers match one another.

The present invention has been made in order to solve the above-mentioned problems, and it is therefore an object of the present invention to provide a wavelength multiplexing transmission system using a multi carrier method that suppresses degradation in the transmission characteristic with a simple and low-cost configuration.

### MEANS FOR SOLVING THE PROBLEM

According to the present invention, there is provided a wavelength multiplexing transmission system including:
an optical transmission and reception device including a plurality of transponders each having a plurality of optical transmitters and receivers disposed therein;
a BER monitoring device to monitor the BERs of the optical transmitters and receivers;
variable optical attenuators to attenuate light signals output from the optical transmitters and receivers;
a controller to control the amounts of attenuation of the variable optical attenuators in such a way that the sum total of the BERs of the optical transmitters and
receivers which are monitored by the BER monitoring device becomes small; and
an optical multiplexing and demultiplexing device to multiplex the light signals attenuated by the variable optical attenuators into a light signal and transmit this light signal to outside the wavelength multiplexing transmission system, and
demultiplex a light signal from outside the wavelength multiplexing transmission system into light signals and transmit these light signals to the optical transmitters and receivers.

Further, according to the present invention, there is provided a wavelength multiplexing transmission system including:
an optical transmission and reception device including a plurality of transponders each having a plurality of optical transmitters and receivers disposed therein;
polarization controllers to control the polarizations of light signals output from the optical transmitter and receivers for each of the transponders in such a way that the polarizations are deviated from one another at equal intervals; and
an optical multiplexing and demultiplexing device to multiplex the light signals whose polarizations are controlled by the polarization controllers into a light signal and transmit this light signal to outside the wavelength multiplexing transmission system, and demultiplex a light signal from outside the wavelength multiplexing transmission system into light signals and transmit these light signals to the optical transmitters and receivers.

Further, according to the present invention, there is provided a wavelength multiplexing transmission system including:
an optical transmission and reception device including a plurality of transponders each having a plurality of optical transmitters and receivers disposed therein;
a timing monitor to monitor the modulation timings of the optical transmitters and receivers;
a timing controller to control the modulation timings monitored by the timing monitor in such a way that the modulation timings are shifted relative to one another among the optical transmitters and receivers; and
an optical multiplexing and demultiplexing device to multiplex light signals output from the optical transmitters and receivers into a light signal and transmit this light signal to outside the wavelength multiplexing transmission system, and
demultiplex a light signal from outside the wavelength multiplexing transmission system into light signals and transmit these light signals to the optical transmitters and receivers.

### ADVANTAGES OF THE INVENTION

Because the wavelength multiplexing transmission system according to the present invention is configured as set forth above, the wavelength multiplexing transmission system can suppress degradation in the transmission characteristics with a simple and low-cost configuration.

### BRIEF DESCRIPTION OF THE FIGURES

- FIG. 1: is a diagram showing an outline of a wavelength multiplexing transmission system according to Embodiment 1 of the present invention;
- FIG. 2: is a diagram showing the configuration of the wavelength multiplexing transmission system according to Embodiment 1 of the present invention;
- FIG. 3: is a diagram showing the configuration of a wavelength multiplexing transmission system according to Embodiment 2 of the present invention;
- FIG. 4: is a diagram showing the configuration of a wavelength multiplexing transmission system according to Embodiment 3 of the present invention;
- FIG. 5: is a schematic diagram showing the configuration of a conventional WDM device; and
- FIG. 6: is a diagram showing the configuration of a transponder of a conventional wavelength multiplexing transmission system.

### EMBODIMENTS OF THE INVENTION

Hereafter, the preferred embodiments of the present invention will be explained in detail with reference to the drawings.

### Embodiment 1.

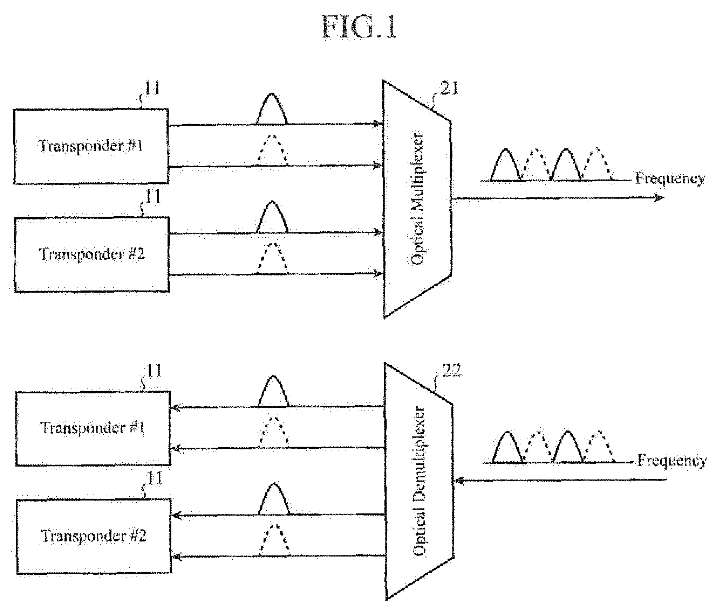

FIG. 1 is a diagram showing an outline of a wavelength multiplexing transmission system according to Embodiment 1 of the present invention.

In the wavelength multiplexing transmission system according to the present invention, as shown in FIG. 1, a function of performing multiplexing/demultiplexing on carriers (light signals) is disposed in, not in each of transponders 11, but in an optical multiplexing and demultiplexing device 2 (an optical multiplexer 21 and an optical demultiplexer 22) disposed outside the transponders. As a result, there can be provided a simple and low-cost system having a configuration which, instead of employing twice as many tunable filters as the number of carriers, typical interleaver and AWG (Arrayed-Waveguide Gating) can be employed as an alternative.

Further, according to Embodiment 1, in order to prevent degradation in transmission characteristics due to a power difference among the carriers within the AWG, a function of monitoring the BER of each carrier and optimizing the optical output power of each carrier is disposed. Hereafter, although an explanation will be made by assuming that the function of optimizing the optical output power of each carrier is disposed in the optical multiplexing and demultiplexing device 2, the function can be alternatively disposed in each transponder 11.

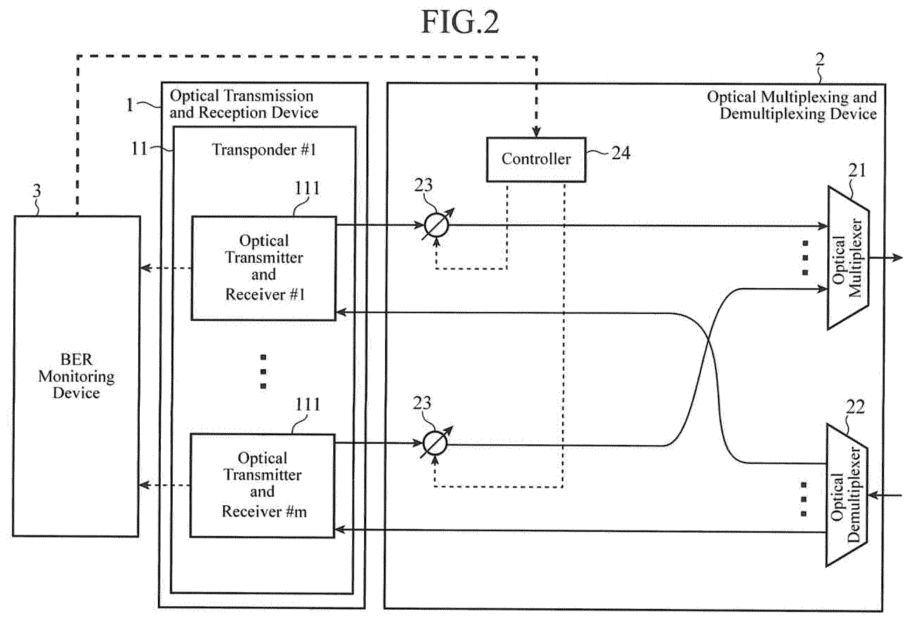

Next, the wavelength multiplexing transmission system that implements the above-mentioned function will be explained by referring to FIG. 2.

The wavelength multiplexing transmission system in which the number of multiple carriers is m is shown in FIG. 2.

The wavelength multiplexing transmission system is comprised of an optical transmission and reception device 1, the optical multiplexing and demultiplexing device 2, and a BER monitoring device 3, as shown in FIG. 2.

The optical transmission and reception device 1 has n transponders 11 in each of which m optical transmitters and receivers 111 are disposed, and transmits and receives light signals. In the example of FIG. 1, only one transponder 11 is illustrated. The optical transmitters and receivers 111 emit laser lights having different wavelengths, and modulate these laser lights to generate transmission signals (light signals) and transmit the transmission signals to the optical multiplexing and demultiplexing device 2, respectively. The optical transmitters and receivers also receive light signals from the optical multiplexing and demultiplexing device 2, and convert the light signals into electric signals by using optical receiving elements disposed therein.

The number of light signals of the multiple carriers output from this optical transmission and reception device 1 is m × n. Each optical transmitter and receiver 111 of the optical transmission and reception device 1 also has a function of transmitting information (reception BER information) about the partner's BER to the BER monitoring device 3.

The optical multiplexing and demultiplexing device 2 is disposed outside the optical transmission and reception device 1, multiplexes the light signals from the optical transmitters and receivers 111 into a light signal and transmits this light signal to outside the wavelength multiplexing transmission system, and demultiplexes a light signal from outside the wavelength multiplexing transmission system into light signals and transmits these light signals to the optical transmitters and receivers 111. This optical multiplexing and demultiplexing device 2 is comprised of the optical multiplexer 21, the optical demultiplexer 22, variable optical attenuators (VOA) 23 and a controller 24.

The optical multiplexer 21 multiplexes the light signals which are output from the optical transmitters and receivers 111 and which are attenuated by the variable optical attenuators 14 into a light signal. The light signal after being multiplexed by this optical multiplexer 21 is transmitted outside the wavelength multiplexing transmission system.

The optical demultiplexer 22 demultiplexes a light signal from outside the wavelength multiplexing transmission system into light signals. The light signals after being demultiplexed by this optical demultiplexer 22 are transmitted to the optical transmitters and receivers 111.

The VOAs 23 are disposed while being brought into correspondence with the optical transmitters and receivers 111, respectively, and each of the VOAs attenuates the light signal from the corresponding one of the optical transmitters and receivers 111.

The controller 24 controls the amounts of attenuation of the VOAs 23 in such a way that the sum total of the BERs of the optical transmitters and receivers 111 which are monitored by the BER monitoring device 3 becomes small.

The BER monitoring device 3 monitors the BER of each of the optical transmitters and receivers 111 on the basis of the reception BER information from the optical transmission and reception device 1.

Next, advantages provided by the wavelength multiplexing transmission system configured as above will be explained.

The optical transmission and reception device 1 of the wavelength multiplexing transmission system includes the n transponders 11 each having the m optical transmitters and receivers 111, and light signals of m × n multiple carriers are output from the optical transmission and reception device 1. The m × n multiple carriers output from this optical transmission and reception device 1 differ from one another in optical output power because of variations in the optical transmitters and receivers 111 with respect to each carrier.

If long distance transmission is carried out with the optical output powers of the carriers being different from one another, the amplification of each of the optical output powers at each of submarine repeating devices disposed at intervals of about 50 km is not carried out equally. As a result, the balance among the powers of the carriers comes undone and a nonlinear penalty caused by the long distance transmission becomes large, and this causes degradation in the transmission characteristics. In order to suppress this degradation, it is necessary to optimize the optical output power of each carrier.

To this end, according to the present invention, the BER of each of the optical transmitters and receivers 111 is monitored by the BER monitoring device 3. Because bidirectional communications are carried out in many cases based on WDM, information about the partner's BER can be acquired from each of the optical transmitters and receivers 111, and the value of the BER can be monitored by the BER monitoring device 3.

The controller 24 then controls each of the VOAs 23 according to the monitored result acquired by the BER monitoring device 3. At that time, the controller 24 can optimize the optical output power of each carrier by controlling the VOAs 23 in such a way that the sum total of the BERs of the optical transmitters and receivers 111 monitored by the BER monitoring device 3 is minimized.

As a result, because the light signals whose optical output powers are optimized are multiplexed by the optical multiplexing and demultiplexing device 2 and are transmitted as a single light signal, the degradation in the transmission characteristics can be suppressed and long distance transmission can be carried out.

The configuration in which the device disposed in each station is simplified by speeding up the signaling in the device disposed in the station, reducing the number of optical fibers, and performing multiplexing of signals between stations at a long distance to slow down transmission between stations is disclosed by Patent Reference 1. The technique disclosed by this Patent Reference 1 is similar to the present invention in only a configuration associated with the wavelength multiplexing technique. However, the present invention greatly differs from the technique disclosed by Patent Reference 1 in that the present invention is aimed at performing the carrier multiplexing and demultiplexing function for each of the transponders 11 outside the transponders 11.

As mentioned above, the wavelength multiplexing transmission system according to this Embodiment 1 includes the VOAs 23, the controller 24 and the BER monitoring device 3 installed therein, monitors the BER of each carrier, and controls the VOAs 23 in such a way that the sum total of the BERs becomes small, thereby being able to reduce the long-distance transmission penalty which is caused because of a difference in optical output power among the carriers on the transmit side.

Further, by placing the optical multiplexing and demultiplexing device 2 outside the optical transmission and reception device 1, the conventional complicated and expensive configuration which employs twice as many tunable filter as the number of carriers can be replaced by the interleaver and the AWG, and the wavelength multiplexing transmission system can be implemented to have a simple low-cost configuration.

### Embodiment 2.

In Embodiment 1, the case of having a function of, in order to prevent degradation in the transmission characteristics due to a difference in power among the carriers within the AWG, monitoring the BER of each carrier and controlling the VOAs 23 in such a way that the sum total of the BERs becomes small is shown. In contrast with this, in Embodiment 2, a case of having a function of controlling the polarization of each of carriers so as to deviate the polarizations of the carriers from one another at equal intervals, thereby suppressing a nonlinear penalty will be shown.

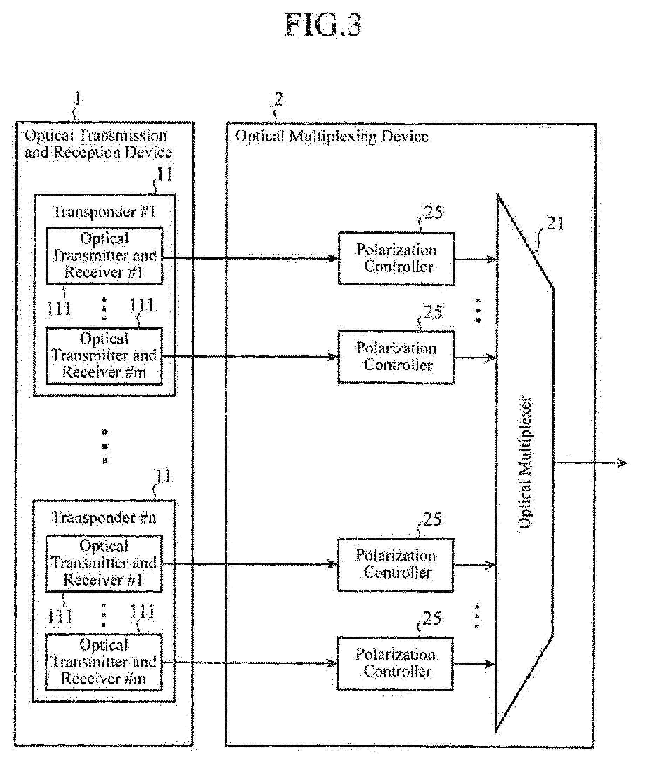

FIG. 3 is a diagram showing the configuration of a wavelength multiplexing transmission system according to Embodiment 2 of the present invention. In FIG. 3, only the configuration of a transmit side, which is included in the configuration of the wavelength multiplexing transmission system, is illustrated.

The wavelength multiplexing transmission system according to Embodiment 2 shown in FIG. 3 is a one in which the VOAs 23, the controller 24 and the BER monitoring device 3 are removed from the wavelength multiplexing transmission system according to Embodiment 1 shown in FIG. 2, and polarization controllers 25 are added to an optical multiplexing and demultiplexing device 2. The other components are the same as those of Embodiment 1, and are designated by the same reference numerals and the explanation of the components will be omitted hereafter.

The polarization controllers 25 are disposed while being brought into correspondence with optical transmitters and receivers 111, respectively, and each of the polarization controllers controls the polarization of a light signal from a corresponding one of the optical transmitters and receivers 111 for each transponder 11 in such a way that the polarizations of m light signals from the optical transmitters and receivers 111 are deviated from one another at equal intervals (including a case in which the polarizations are deviated from one another at substantially equal intervals).

In this case, each of the m multiple carriers output from each transponder 11 is in a random polarization state. On the other hand, a nonlinear penalty in long distance transmission becomes large in proportion to the light power per polarization. Therefore, when the polarizations of the m multiple carriers match one another, the nonlinear penalty becomes large and this causes degradation in the transmission characteristics.

In order to suppress this degradation, it is necessary to cause the polarizations of the carriers to be in different polarization states, respectively. To this end, the polarizations of the m multiple carriers are deviated from one another at equal intervals by using the polarization controllers 25. As a result, the nonlinear penalty can be suppressed and the degradation in the transmission characteristics can be suppressed.

### Embodiment 3.

In Embodiment 1, the case of having a function of, in order to prevent degradation in the transmission characteristics due to a difference in power among the carriers within the AWG, monitoring the BER of each carrier and controlling the VOAs 23 in such a way that the sum total of the BERs becomes small is shown. In contrast with this, in Embodiment 3, a case of having a function of monitoring the modulation timing of each of carriers and controlling the modulation timing so as to shift the modulation timings of the carriers relative to one another, thereby suppressing a nonlinear penalty will be shown.

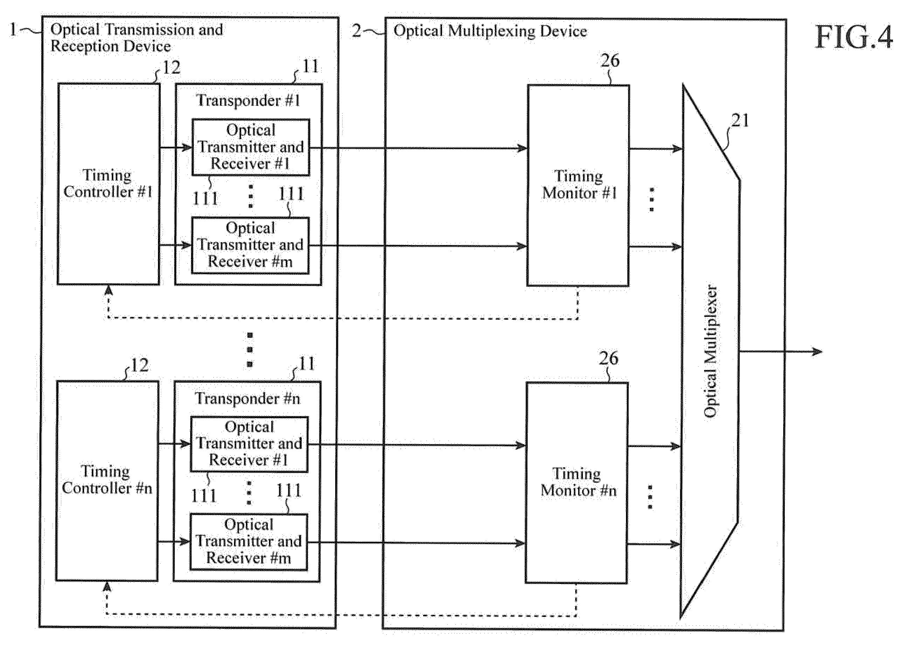

FIG. 4 is a diagram showing the configuration of a wavelength multiplexing transmission system according to Embodiment 3 of the present invention. In FIG. 4, only the configuration of a transmit side, which is included in the configuration of the wavelength multiplexing transmission system, is illustrated.

The wavelength multiplexing transmission system according to Embodiment 3 shown in FIG. 4 is a one in which the VOAs 23, the controller 24 and the BER monitoring device 3 are removed from the wavelength multiplexing transmission systems according to Embodiment 1 shown in FIG. 2, and timing monitors 26 are added to an optical multiplexing and demultiplexing device 2 and timing controllers 12 are added to an optical transmission and reception device 1. The other components are the same as those of Embodiment 1, and are designated by the same reference numerals and the explanation of the components will be omitted hereafter.

The timing monitors 26 are disposed while being brought into correspondence with transponders 11, respectively, and each of the timing monitors monitors the modulation timings of optical transmitters and receivers 111 of a corresponding one of the transponders 11.

The timing controllers 12 are disposed while being brought into correspondence with the transponders 11, respectively, and each of the timing controllers controls the modulation timings monitored by the timing monitor 26 in such a way that the modulation timings of the optical transmitters and receivers 111 of the corresponding one of the transponders 11 are shifted relative to one another.

In this case, each of the modulation timings of the m multiple carriers output from each transponder 11 occurs at random. On the other hand, a nonlinear penalty in long distance transmission becomes large in proportion to the light power per polarization. Therefore, when the modulation timings of the m multiple carriers match one another, the nonlinear penalty becomes large and this causes degradation in the transmission characteristics.

In order to suppress this degradation, it is necessary to cause the modulation timings of the carriers to be different from one another and output the carriers. To this end, by using the timing monitor 26, the modulation timing of each carrier is monitored and the modulation timings of each transponder 11 are controlled by the timing controller 12 according to the result of the monitoring. By then shifting the modulation timings of the m multiple carriers relative to one another, the nonlinear penalty can be suppressed and the degradation in the transmission characteristics can be suppressed.

While the invention has been described in its preferred embodiments, it is to be understood that an arbitrary combination of two or more of the above-mentioned embodiments can be made, various changes can be made in an arbitrary component according to any one of the above-mentioned embodiments, and an arbitrary component according to any one of the above-mentioned embodiments can be omitted within the scope of the invention.

### INDUSTRIAL APPLICABILITY

The wavelength multiplexing transmission system according to the present invention can suppress degradation in the transmission characteristic with a simple and low-cost configuration, and is suitable for use as a wavelength multiplexing transmission system or the like provided with an optical transmission and reception device including a plurality of transponders each having a plurality of optical transmitters and receivers.

### EXPLANATIONS OF REFERENCE NUMERALS

- 1: optical transmission and reception device
- 2: optical multiplexing and demultiplexing device
- 3: BER monitoring device
- 11: transponder
- 12: timing controller
- 21: optical multiplexer
- 22: optical demultiplexer
- 23: variable optical attenuator (VOA)
- 24: controller
- 25: polarization controller
- 26: timing monitor
- 111: optical transmitter and receiver

## Claims

1. A wavelength multiplexing transmission system comprising:
- an optical transmission and reception device including a plurality of transponders each having a plurality of optical transmitters and receivers disposed therein;
- a BER monitoring device adapted to monitor BERs of the optical transmitters and receivers;
- variable optical attenuators adapted to attenuate light signals output from the optical transmitters and receivers;
a controller adapted to control amounts of attenuation of the variable optical attenuators in such a way that a sum total of the BERs of the optical transmitters and receivers which are monitored by the BER monitoring device becomes small; and
- an optical multiplexing and demultiplexing device adapted to multiplex the light signals attenuated by the variable optical attenuators in a light signal and transmit this light signal to outside the wavelength multiplexing transmission system, and demultiplex a light signal from outside the wavelength multiplexing transmission system into light signals and transmit these light signals to the optical transmitters and receivers.

2. A wavelength multiplexing transmission system comprising:
- an optical transmission and reception device including a plurality of transponders each having a plurality of optical transmitters and receivers disposed therein;
- polarization controllers adapted to control polarizations of light signals output from the optical transmitter and receivers for each of the transponders in such a way that the polarizations are deviated from one another at equal intervals; and
- an optical multiplexing and demultiplexing device adapted to multiplex the light signals whose polarizations are controlled by the polarization controllers into a light signal and transmit this light signal to outside the wavelength multiplexing transmission system, and demultiplex a light signal from outside the wavelength multiplexing transmission system into light signals and transmit these light signals to the optical transmitters and receivers.

3. A wavelength multiplexing transmission system comprising:
- an optical transmission and reception device including a plurality of transponders each having a plurality of optical transmitters and receivers disposed therein;
- a timing monitor adapted to monitor modulation timings of the optical transmitters and receivers;
- a timing controller adapted to control the modulation timings monitored by the timing monitor in such a way that the modulation timings are shifted relative to one another among the optical transmitters and receivers; and
- an optical multiplexing and demultiplexing device adapted to multiplex light signals output from the optical transmitters and receivers into a light signal and transmit this light signal to outside the wavelength multiplexing transmission system, and demultiplex a light signal from outside the wavelength multiplexing transmission system into light signals and transmit these light signals to the optical transmitters and receivers.
